# EUROPÄISCHE PATENTANMELDUNG

(11) **EP 3 244 203 A1**
(43) Veröffentlichungstag der Anmeldung: **15.11.2017**
(21) Anmeldenummer: 17170027.1
(22) Anmeldetag: 09.05.2017
(51) Int. Cl.: G01N 29/04, G01N 29/14, G01N 29/44, G01N 29/48, G01H 17/00

(54) **VERFAHREN UND VORRICHTUNG ZUR DETEKTION VON FEHLERN AN ROTIERENDEN MESSERN MITTELS AKUSTISCHER EMISSIONEN**

(30) Priorität: 10.05.2016 DE 102016208002
(71) Anmelder: ThyssenKrupp Steel Europe AG, 47166 Duisburg (DE); thyssenkrupp AG, 45143 Essen (DE)
(72) Erfinder: Blumenau, Marc, 44287 Dortmund (DE); Pickhardt, Lars, 58708 Menden (DE)
(74) Vertreter: thyssenkrupp Intellectual Property GmbH

(57) **Zusammenfassung**

Die vorliegende Erfindung betrifft ein Verfahren und eine Vorrichtung zur Detektion von Fehlern an rotierenden Messern. Bei dem Verfahren wird der von einem rotierenden Messer (3a, 3b, 3c, 3d) erzeugte Raumschall mittels eines Mikrofons (1), welches einen räumlichen Abstand zu dem rotierenden Messer aufweist, aufgenommen, weitergeleitet und durch eine Signalaufbereitungseinheit (6) und eine Datenerfassungseinheit (7) verarbeitet, in digitale Signale umgewandelt und in einer Datenverarbeitungseinheit (13) verarbeitet, wobei ein Schwellwert für den Schalldruck jeweils eines Messerumlaufs ermittelt wird und jedes einzelne Amplitudensignal eines auf einen Messerumlauf (M_i) nachfolgenden Messerumlaufs (M_i+1) mit dem Schwellwert (SW_i) des letzten artefaktfreien Messerumlaufs (M_i) verglichen wird, woraufhin eine Defektanzeige ausgelöst wird, wenn in mindestens drei aufeinanderfolgenden Messerumläufen (M_i+1 bis M_i+3) periodisch an der gleichen Position im Messerumlauf wiederkehrende Amplitudensignale, welche jeweils über dem Schwellwert des letzten artefaktfreien Messerumlaufs liegen, auftreten.

## Beschreibung

Die Erfindung betrifft ein Verfahren sowie eine Vorrichtung zur Detektion von Fehlern an rotierenden Messern.

Rotierende Messer sind als Bestandteile von Schneidvorrichtungen bekannt. Sie finden eine breite industrielle Anwendung beim Schneiden oder Spalten unterschiedlichster Materialien. Die Messer sind einer Verschleißbeanspruchung ausgesetzt, welche mit der Härte der zu verarbeitenden Materialien zunimmt. Vor allem in der Metallverarbeitung treten als Folge von Materialversagen durch Risse häufig Messerausbrüche beispielsweise in Form keilförmiger Abplatzungen an den Messerkanten auf. Wird der Messerausbruch nicht sofort erkannt und das Messer ausgetauscht, so beeinträchtigen die defekten Messer die Qualität des zu bearbeitenden Materials. Das mit einem Messerausbruch behaftete Messer erzeugt dabei beim Auftreffen der defekten Messerstelle auf das zu verarbeitende Material Schädigungen an der Kante des verarbeiteten Materials. Dies trifft insbesondere auf Produkte mit ausgeprägter Längsausdehnung zu, welche dann in der Regel mechanisch nachgearbeitet werden müssen, um die Kantenfehler zu entfernen.

Durch technische Maßnahmen wie zum Beispiel der Auswahl eines besonders verschleißfesten Werkstoffes für das Messermaterial, einer Beschichtung der Messerkanten oder einer Aufhärtung der Messerkanten lässt sich zwar die Standzeit der Messer verlängern, ein Messerausbruch kann durch diese Maßnahmen jedoch nicht ausgeschlossen werden. Deshalb ist eine ständige Kontrolle der Messer erforderlich.

Eine Möglichkeit, Messer auf Ausbrüche hin zu inspizieren, ist die Überprüfung durch den Bediener der Schneidvorrichtung. Dies kann zum Beispiel optisch durch Beobachten des rotierenden Messers oder des verarbeiteten Materials erfolgen. Wegen der hohen Lärmbelastung und des Unfallrisikos bei Arbeiten an oder in der Nähe von rotierenden Messern ist ein dauerhafter Aufenthalt in der Nähe eines rotierenden Messers nicht möglich. Dies erschwert die Messerkontrolle an Anlagen, die in einem kontinuierlichen Schneid- oder Besäumbetrieb arbeiten. So ist die Erkennung eines Messerausbruchs zum Ereignis der Entstehung des Messerausbruchs oftmals deutlich zeitverzögert, so dass ein Messerwechsel erst verspätet eingeleitet werden kann, was sich ungünstig auf die Menge des beschädigten Materials auswirkt.

Aus DD 234 378 A1 ist eine Schaltungsanordnung zur Werkzeugbrucherkennung an Drehwerkzeugen bekannt, die eine zeitnahe Erkennung von Ausbrüchen ermöglicht, ohne dass sich eine Person zur Überprüfung des Messerzustands dauerhaft in der unmittelbaren Nähe des Messers aufhalten muss. Dabei werden Körperschallschwingungen aufgenommen, zwei parallelen Messketten zugeführt und ausgewertet. Ein Bruchsignal wird ausgegeben, wenn zwei aufeinanderfolgende Halbwellen entgegengesetzter Polarität der durch den Bandpass der ersten Messkette selektierten Frequenz die Komparatorschwelle überschreiten. Ein Nachteil dieser Vorrichtung besteht darin, dass Schwingungsaufnehmer zur Aufnahme von Körperschallschwingungen direkt am rotierenden Werkzeug angebracht werden müssen, so dass ein Einbau technisch schwierig zu realisieren ist. Zudem behindern direkt am Werkzeug angebrachte Schwingungsaufnehmer die Arbeitsabläufe an der Schneidvorrichtung. Darüber hinaus sind Schwingungsaufnehmer, die direkten Kontakt zum rotierenden Werkzeugteil haben, störungsanfällig. Ein weiterer Nachteil dieser Vorrichtung besteht darin, dass sie ein hohes Risiko für Fehlanzeigen in körperschallintensiven Umgebungen, wie sie zum Beispiel in metallverarbeitenden Produktionsanlagen vorkommen, aufweisen.

Der Erfindung liegt daher die Aufgabe zugrunde, ein Verfahren und eine Vorrichtung zur Detektion von Fehlern an einem oder mehreren rotierenden Messern zu entwickeln, welche technisch einfach zu realisieren sind und Behinderungen der Arbeitsabläufe sowie das Risiko für Beschädigungen der Vorrichtung und für Fehlanzeigen reduzieren.

In Bezug auf das Verfahren ist diese Aufgabe erfindungsgemäß durch ein folgende Schritte umfassendes Verfahren gelöst worden:
a) Aufnehmen des von einem rotierenden Messer erzeugten Raumschalls mittels eines Mikrofons, welches einen räumlichen Abstand zu dem rotierenden Messer aufweist,
b) Weiterleiten und Verarbeiten der Raumschallsignale durch eine Signalaufbereitungseinheit,
c) Weiterleiten und Verarbeiten der von der Signalaufbereitungseinheit ausgegebenen analogen Signale durch eine Datenerfassungseinheit,
d) Umwandeln der analogen Signale in digitale Signale in der Datenerfassungseinheit,
e) Weiterleiten der digitalen Signaldaten zu einer Datenverarbeitungseinheit,
f) Verarbeiten der digitalen Signaldaten mittels einer Datenverarbeitungseinheit, umfassend
   f1) Ermittlung jeweils eines Schwellwert (SW_i) für den Schalldruck jeweils eines vollständigen Messerumlaufs (M_i),
   f2) Vergleich jedes einzelnen Amplitudensignals eines auf einen Messerumlauf (M_i) nachfolgenden Messerumlaufs (M_i+1) mit dem Schwellwert (SW_i) des letzten artefaktfreien Messerumlaufs (M_i),
   f3) optionales Visualisieren der verarbeiteten Daten,
   f4) Auslösen einer Defektanzeige, wenn in mindestens drei aufeinanderfolgenden Messerumläufen (M_i+1 bis M_i+3) periodisch an der gleichen Position im Messerumlauf wiederkehrende Amplitudensignale, welche jeweils über dem Schwellwert des letzten artefaktfreien Messerumlaufs liegen, auftreten,
g) Anzeigen eines Defekts mittels einer Defektanzeigeeinheit.

In Bezug auf die Vorrichtung ist die voranstehend genannte Aufgabe erfindungsgemäß gelöst durch eine Vorrichtung umfassend ein oder mehrere zu den Messern berührungslos positionierte Mikrofone, eine Signalaufbereitungseinheit, eine Datenerfassungseinheit, eine Datenverarbeitungseinheit und eine Defektanzeigeeinheit, wobei die Datenverarbeitungseinheit eine bei Vorliegen von in mindestens drei aufeinanderfolgenden Messerumläufen periodisch an der gleichen Position im Messerumlauf wiederkehrenden und jeweils über dem Schwellwert des letzten artefaktfreien Messerumlaufs liegenden Amplitudensignalen eine Meldung über einen Messerdefekt auslösende Einheit umfasst.

Vorteilhafte Ausgestaltungen der Erfindung sind in den abhängigen Ansprüchen angegeben und werden wie der allgemeine Erfindungsgedanke nachfolgend näher erläutert.

Der vorliegenden Erfindung liegt die Erkenntnis zu Grunde, dass fehlerbehaftete umlaufende Messer charakteristische Geräusche erzeugen, durch welche sie akustisch von fehlerfreien umlaufenden Messern unterschieden werden können.

Die erfindungsgemäße Vorrichtung umfasst ein oder mehrere Mikrofone. Wenn in der vorliegenden Erfindung im Folgenden von einem Mikrofon die Rede ist, so ist dies eine vereinfachte Ausdrucksweise für das Vorhandensein mindestens eines Mikrofons.

Das Mikrofon ist in einem Abstand von mindestens 50 mm und höchstens 1500 mm zum rotierenden Messer positioniert. Der Abstand zwischen Mikrofon und rotierendem Messer beträgt mindestens 50 mm, um bei Eintritt eines durch ein defektes Messer verursachten Störungsfalls Beschädigungen am Mikrofon sowie an dem zu verarbeitendem Produkt zu vermeiden. Der Abstand zwischen Mikrofon und rotierendem Messer beträgt höchstens 1500 mm, um die Aufnahme des vom umlaufenden Messer erzeugten Geräuschs im Schadensfall zu gewährleisten. Da der Schalldruck mit zunehmender Entfernung von der Schallquelle abnimmt, besteht ab einem Abstand von mehr als 1500 mm das Risiko, dass das vom umlaufenden Messer erzeugte Geräusch nicht mehr detektiert wird.

Das Mikrofon ist vorzugsweise als Elektretmikrofon ausgebildet. Elektretmikrofone sind Membranmikrofone und als solche Kondensatormikrofone. Durch ein Elektretmikrofon werden ausschließlich Raumschallsignale aufgenommen. So wird die Aufnahme von Körperschallsignalen, welche die Fehlerdetektion negativ beeinflussen würden, vermieden. Die Aufnahme von Körperschallsignalen ist bei der vorliegenden Erfindung ausdrücklich nicht erwünscht, um Fehlmessungen in körperschallintensiven Umgebungen zu vermeiden. Elektretmikrofone sind besonders bevorzugt, weil sie für die vorliegende Anwendung außerdem ein optimales Kosten-/Nutzen-Verhältnis aufweisen.

Durch das Mikrofon werden die Schallwellen aufgenommen und in elektrische Signale umgewandelt. Bei den Signalen handelt es sich um Amplitudensignale. Wenn vorliegend von Signalen die Rede ist, so sind damit Amplitudensignale gemeint. Als Signaldichte S wird im Folgenden die Anzahl je Millimeter Umlauflänge des umlaufenden Messers aufgenommener Signale bezeichnet.

Prinzipiell bemisst sich die Signaldichte nach der erwarteten Größe des zu detektierenden Defekts. Dabei ist die Signaldichte bevorzugt so bemessen, dass mindestens zwei Signale über die erwartete Länge des zu detektierenden Defekts aufgezeichnet werden, wobei die erwartete Länge des zu detektierenden Defekts in Umlaufrichtung betrachtet wird. Die erwartete Länge des zu detektierenden Defekts wird aus Erfahrungswerten abgeleitet. So beträgt beispielsweise im Falle von Fehlern, welche in Umlaufrichtung eine Länge von 1 mm aufweisen, die Anzahl je Messerumlauf mindestens aufzunehmender Signale zwei Signale pro Millimeter umlaufender Länge.
Messerausbrüche sind Defekte, welche typischer Weise eine Länge von 1 mm oder mehr in Umlaufrichtung aufweisen. Betriebsversuche haben gezeigt, dass eine Signaldichte von mindestens 10 Signalen je Millimeter umlaufender Länge dazu geeignet ist, die Sicherheit der Fehlerdetektion von Messerausbrüchen an umlaufenden Messern zu verbessern. Um die Sicherheit der Fehlerdetektion zu erhöhen, werden bevorzugt höhere Signaldichten von mindestens 100 Signalen je Millimeter umlaufender Länge verwendet. Höhere Signaldichten von mindestens 100 Signalen je Millimeter umlaufender Länge werden bevorzugt auch verwendet, um kleinere Defekte wie beispielsweise Anrisse zu detektieren.

Das Mikrofon ist mit einem Signalanschlussgehäuse verbunden, welches eine Signalaufbereitungseinheit sowie eine Datenerfassungseinheit enthält. Die vom Mikrofon aufgenommenen Signale werden in das Signalanschlussgehäuse geleitet.

Im Signalanschlussgehäuse werden die Signale zunächst in der Signalaufbereitungseinheit über einen Hochpass ausgekoppelt. Danach werden die Signale elektrisch verstärkt. Die Verstärkung erfolgt bevorzugt stufenweise zwischen 1fach, 10fach und 100fach. Anschließend werden die Signale durch einen Tiefpass gefiltert. Der Tiefpass weist vorzugsweise eine Grenzfrequenz von höchstens 15 kHz auf, wodurch Rauschen und höherfrequente Signalteile mit einer Frequenz oberhalb von 100 kHz vermieden werden. Im Anschluss an die Tiefpassfilterung werden die analogen Signale in eine Datenerfassungseinheit geleitet. In der Datenerfassungseinheit werden die analogen Signale in digitale Daten umgesetzt. Die digitalen Daten werden danach an eine Datenverarbeitungseinheit weitergeleitet.

Eine Möglichkeit der Datenverarbeitung besteht beispielsweise darin, die Informationen über einen geeigneten Drucker auszudrucken und manuell auszuwerten. In diesem Fall umfasst die Datenverarbeitungseinheit einen Drucker und eine die Daten auswertende Person.

In einer bevorzugten Ausführungsform umfasst die Datenverarbeitungseinheit einen programmierbaren Rechner, welcher eine zur Datenverarbeitung geeignete Software umfasst.

Durch die Datenverarbeitungseinheit werden die digitalen Signaldaten zunächst gefiltert. Zur Verbesserung der Anzeigensicherheit bei der Fehlerdetektion an umlaufenden Messern sind Bandpassfilter besonders vorteilhaft, die ein Frequenzspektrum oberhalb der 500. Oberwelle eliminieren. Besonders vorteilhaft insbesondere zur Fehlerdetektion an umlaufenden Rundmessern ist ein Ausblenden von Frequenzen unterhalb von 300 Hz und oberhalb von 400 Hz. Der Frequenzbereich von 300 bis 400 Hz hat sich in Referenzmessungen als optimaler Frequenzbereich zur Erfassung von Fehlern an umlaufenden Rundmessern ergeben. Die Filterung erfolgt bevorzugt über einen rekursiven Filter vom Typ Butterworth, weil dieser vorteilhafte Einstellmöglichkeiten aufweist. In einer bevorzugten Ausführungsform werden die Daten anschließend fortlaufend zum einen über die fortlaufende Signalnummer und zum anderen über die Zeit eingelesen. Danach werden die Signale mittels einer Fast-Fourier-Transformation über die Zeit aufgeteilt. Ziel der Fast-Fourier-Transformation ist es, den Amplitudengang der Signale zu erhalten.

Für die Verarbeitung der Signaldaten eignen sich neben rekursiven Filtern oder einer Fast-Fourier-Transformation auch weitere, bekannte Analysewerkzeuge wie beispielsweise ein Nyquist-Shannon-Abtasttheorem oder Grenzwertfilter.

Erfindungsgemäß erfolgt mittels der Datenverarbeitungseinheit eine Schwellwertberechnung. Der Schwellwert wird als der n-fache Wert des Gleichrichtmittelwerts berechnet. Der Gleichrichtmittelwert ist erfindungsgemäß der arithmetische Mittelwert der Beträge aller innerhalb eines Messerumlaufs aufgezeichneten Schalldrücke. Der Gleichrichtmittelwertberechnung werden dabei die Schalldrücke der aufgezeichneten Signale beispielsweise in Pa oder in Volt zugrunde gelegt.

Der Multiplikationsfaktor n beträgt mindestens 4 und höchstens 12 und wird zu Beginn eines Verarbeitungsprozesses, insbesondere nach dem Einbau eines neuen Messers, festgelegt. Der Schwellwert beträgt mindestens das 4-fache des Gleichrichtmittelwerts, um den Anteil irrelevanter Signale für die weitere Datenverarbeitung zu minimieren. In potentiell lauteren Umgebungen beträgt der Schwellwert bevorzugt mindestens das 6-fache, besonders bevorzugt mindestens das 8-fache des Gleichrichtmittelwerts. Der Schwellwert beträgt maximal das 12-fache des Gleichrichtmittelwerts, um das Risiko, relevante Signale unberücksichtigt zu lassen, zu minimieren. In metallverarbeitenden Betrieben insbesondere beim Besäumen von Stahlbändern hat sich die Berechnung des Schwellwerts als das 10-fache des Gleichrichtmittelwerts als besonders geeignet für die Detektion von Messerausbrüchen erwiesen.

Beginnend mit dem ersten Messerumlauf nach einem Messerwechsel wird für jeden Messerumlauf (M_i) jeweils ein Schwellwert (SW_i) berechnet. In der Datenverarbeitungseinheit wird anschließend der Schwellwert (SW_i) eines Messerumlaufs (M_i) mit der Höhe jedes einzelnen Signals des ihm nachfolgenden Messerumlaufs (M_i+1) verglichen. Ein Signal eines Messerumlaufs (M_i+1), welches größer ist als der Schwellwert (SW_i) des vorangegangenen Messerumlaufs (M i), wird als Artefakt bezeichnet. Tritt in einem Messerumlauf (M_i+1) ein Artefakt auf, werden die Signale der auf den artefaktbehafteten Messerumlauf (M_i+1) folgenden Messerumläufe jeweils mit dem Schwellwert (SW_i) des letzten artefaktfreien Messerumlaufs verglichen. Ein Messerumlauf, in welchem kein Artefakt auftritt, wird auch als artefaktfreier Messerumlauf bezeichnet.

Treten in mindestens drei aufeinanderfolgenden Messerumläufen (M_i+1 bis M_i+3) Artefakte periodisch an der gleichen Position im Messerumlauf wiederkehrend auf, so wird eine Defektanzeige ausgelöst. Eine Defektanzeige wird erst bei mindestens drei aufeinanderfolgenden Messerumläufen (M_i+1 bis M_i+3) mit periodisch an der gleichen Position im Messerumlauf wiederkehrenden Artefakten ausgelöst, um das Risiko für Fehlanzeigen durch einmalig oder nur kurzfristig vorkommende Geräusche zu minimieren. Um das Risiko für Fehlanzeigen weiter zu reduzieren, wird eine Defektanzeige bevorzugt bei mindestens vier aufeinanderfolgenden Messerumläufen mit periodisch an der gleichen Position im Messerumlauf wiederkehrenden Artefakten ausgelöst.

Artefaktfreie Messerumläufe unterbrechen eine Folge periodisch an der gleichen Position im Messerumlauf wiederkehrender Artefakte, so dass die Zählung artefaktbehafteter Messerumläufe erneut beginnt.

Unter periodisch an der gleichen Position im Messerumlauf wiederkehrenden Artefakten werden Artefakte verstanden, welche in direkt hintereinander folgenden Messerumläufen jeweils an der gleichen Position bezogen auf den Messerumfang auftreten.

Aus der innerhalb eines Messerumlaufs fortlaufenden Signalnummer U eines einzelnen Signals u ergibt sich aus der Signaldichte S und dem Messerumfang L die räumliche Position L(u) im Messerumlauf, an der das Signal u erzeugt wurde, zu L(u) = U/S. Die zeitliche Position t(u) im Messerumlauf, an der das Signal u erzeugt wurde, ergibt sich zu t(u) = L(u)/v. Dabei ist v die Messergeschwindigkeit. Die Anzahl pro Sekunde Umlaufzeit aufgenommener Signale wird als Abtastfrequenz fs bezeichnet. Mit den angegebenen Beziehungen zwischen U, L(u) und t(u) kann bei Kenntnis der Signaldichte S, des Messerumfangs L und der Messergeschwindigkeit v von der fortlaufenden Nummer U eines einzelnen Signals u auf seine zeitliche oder räumliche Position t(u) bzw. L(u) innerhalb eines Messerumlaufs und umgekehrt geschlossen werden.

Periodisch an der gleichen Position im Messerumlauf wiederkehrende Artefakte treten in gleichen Abständen zueinander auf, wobei die Abstände beispielsweise zeitlich oder räumlich bemessen sein können. Tritt beispielsweise ein Artefakt A1 in einem Messerumlauf M_i+1, welcher insgesamt N Signale aufweist, bei Signal Nummer U von N - also beim U.-ten Signal des Messerumlaufs - auf, und tritt ein weiteres Artefakt A2 im nachfolgenden Messerumlauf M_i+2, welcher ebenfalls N Signale erzeugt, ebenfalls beim U.-ten Signal auf, so liegt ein periodisch an der gleichen Position im Messerumlauf wiederkehrendes Artefakt vor.

Im Sinne der vorliegenden Erfindung bezieht sich die Periodizität auf den zeitlichen oder räumlichen Abstand von in direkt aufeinanderfolgenden Messerumläufen auftretenden Artefakten. In gleichen Abständen ausschließlich innerhalb eines Messerumlaufs auftretende Artefakte hingegen erfüllen nicht die Voraussetzung der Periodizität im Sinne der vorliegenden Erfindung.

In einer bevorzugten Ausführungsform werden dabei die Positionen der in aufeinanderfolgenden Messerumläufen auftretenden Artefakte jeweils mit der Position des im ersten nach einem artefaktfreien Umlauf auftretenden artefaktbehafteten Messerumlaufs verglichen.

In einer weiteren bevorzugten Ausführungsform werden die Positionen der in aufeinanderfolgenden Messerumläufen auftretenden Artefakte jeweils mit der Position der Artefakte des jeweils vorangegangenen artefaktbehafteten Messerumlaufs verglichen.

Wenn vorliegend von der gleichen Position die Rede ist, so ist diese nicht auf eine numerisch identische Position beschränkt. Unter numerisch identischen Positionen werden vorliegend Positionen von Signalen mit entweder identischen fortlaufenden Signalnummern U oder identischen räumlichen Positionen L(u) oder mit identischen zeitlichen Positionen t(u) verstanden.

Im Sinne der vorliegenden Erfindung ist ein Artefakt aus einem nachfolgenden Messerumlauf periodisch an der gleichen Position im Messerumlauf wiederkehrend zu einem Artefakt aus dem vorangegangenem Messerumlauf, wenn seine Position um nicht mehr als +/- 7 % der in fortlaufenden Signalnummern bemessenen Länge des Messerumlaufs von der numerisch identischen Position des Artefakts des vorangegangenen Messerumlaufs abweicht. Gleiches gilt für die Positionen der Artefakte der nachfolgenden Messerumläufe. Diese auch als Signalunschärfe bezeichnete Abweichung von der numerisch identischen Position beträgt nicht mehr als +/- 7 % des in fortlaufenden Signalnummern bemessenen Messerumlaufs, um Fehldetektionen bei unsteter Messer- beziehungsweise Bandgeschwindigkeit, die zum Beispiel beim Beschleunigen oder Abbremsen vorkommt, zu vermeiden. Die Signalunschärfe beträgt bevorzugt nicht mehr als +/- 5 %, und nicht weniger als +/- 2 % der in fortlaufenden Signalnummern bemessenen Länge des Messerumlaufs, um durch den Beschleunigungs- und Abbremsvorgang verursachte Verschiebungen nicht als Ausbruch zu interpretieren. Für das Besäumen von Stahlbändern hat sich eine Signalunschärfe von +/- 5 % der in fortlaufenden Signalnummern bemessenen Länge des Messerumlaufs als besonders geeignet erwiesen.

Eine Visualisierung der Daten erfolgt optional beispielsweise in Form von grafischen Darstellungen, die in einer möglichen Ausführungsform manuell erstellt werden. In einer bevorzugten Ausführungsform erfolgt eine optionale Visualisierung mit Hilfe eines Computers und einer geeigneten Software. Die visualisierten Daten werden anschließend beispielsweise auf Papier ausgewiesen oder auf einem Computermonitor angezeigt.

Liegen in mindestens drei oder bevorzugt mindestens vier aufeinanderfolgenden Messerumläufen periodisch an der gleichen Position im Messerumlauf auftretende Artefakte vor, wird eine Defektanzeige ausgelöst. Die Art und Weise der Defektanzeige ist nicht eingeschränkt und erfolgt beispielsweise akustisch oder optisch, wobei vielfältige Ausführungsformen wie beispielsweise eine mündliche Mitteilung, ein akustischer Signalton, ein optisches Signal auf einem Monitor, eine Meldung auf einem Papierausdruck oder ein optisches Signal, welches in der Nähe des umlaufenden Messers ausgesendet wird, geeignet sind.

Das erfindungsgemäße Verfahren wird bevorzugt in der angegebenen Reihenfolge der Schritte a) bis g) ausgeführt.

Das erfindungsgemäße Verfahren und die erfindungsgemäße Vorrichtung eignen sich insbesondere für den Einsatz in Anlagen zum Schneiden oder Besäumen von Metallbändern, insbesondere gegossenen, warmgewalzten oder kaltgewalzten Stahlbändern, welche unbeschichtet oder beispielsweise organisch, anorganisch oder metallisch beschichtet sein können.

Im Folgenden wird die Erfindung anhand von Ausführungsbeispielen und mehreren schematischen und nicht maßstabsgerechten Zeichnungen näher erläutert.
Fig. 1: Schematischer Querschnitt einer Besäumvorrichtung für Metallflachprodukte mit Messern und Mikrofon
Fig. 2: Schematische Darstellung einer Ausführungsform der erfindungsgemäßen Vorrichtung
Fig. 3: Exemplarische Darstellung digitalisierter Signaldaten
Fig. 4: Messdatenschrieb eines defektfreien Rundmessers
Fig. 5: Messdatenschrieb eines defekten Rundmessers

Das Verfahren und die Vorrichtung wurden an einer Besäumschere erprobt, welche im Auslauf eines Durchlaufglühofens, welcher zum rekristallisierenden Glühen kaltgewalzter Stahlflachprodukte verwendet wird, verbaut ist. In den vorliegenden Versuchen weisen die Besäummesser einen Durchmesser von jeweils 0,3 m auf. Es wurden unbeschichtete Besäummesser aus ESU-Stahl der Handelsbezeichung Askodyne C verwendet.

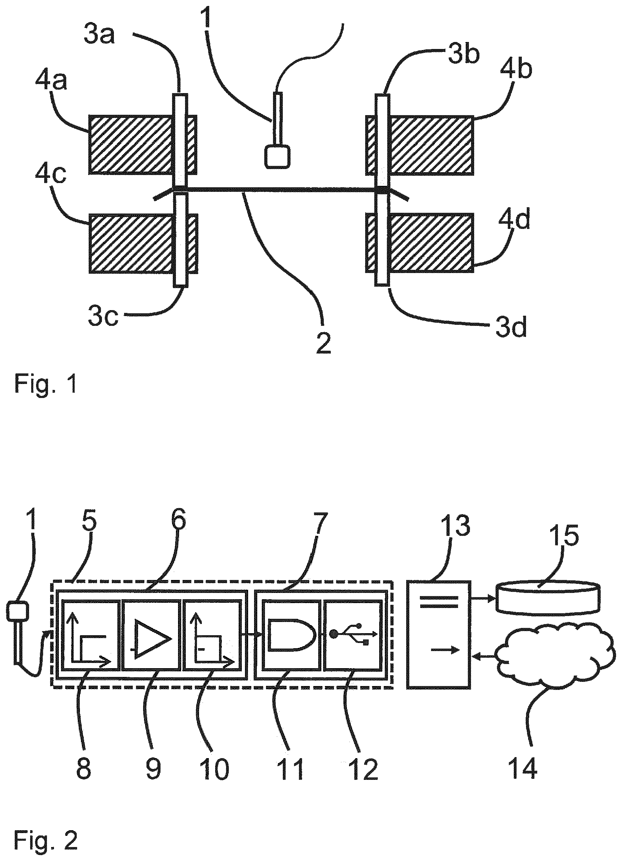

Zunächst zeigt Fig. 1 den schematischen Aufbau einer Besäumvorrichtung für Metallflachprodukte. Die Besäumvorrichtung umfasst zwei obere Besäummesser 3a und 3b sowie zwei untere Besäummesser 3c und 3d, welche jeweils an den Halterungen 4a bis 4d befestigt sind. Bei den Besäummessern handelt es sich um Rundmesser, welche einander als Obermesser-/Untermesserpaar 3a zu 3c und 3b zu 3d zugeordnet sind. Typischerweise überlappen die Besäummesser einander, wobei die Überlappung und Eintauchtiefe der Besäummesser zueinander in Abhängigkeit der Dicke und der Festigkeit des zu besäumenden Metallflachprodukts eingestellt werden.

Ein Metallflachprodukt 2 wird beidseits zwischen den oberen Besäummessern 3a und 3b und den unteren Besäummessern 3c und 3d eingeklemmt. Die Rotation der Rundmesser ist derart eingestellt, dass ein zwischen den Messern befindliches Metallflachprodukt in eine Verfahrensrichtung bewegt wird, während gleichzeitig durch den Druck der gegeneinander gepressten oberen und unteren Messer die Ränder des Metallflachproduktes abgeschnitten werden. Zwischen den oberen Besäummessern 3a und 3b ist ein Mikrofon 1 angebracht. Die Anbringungsmittel sind in Fig. 1 nicht dargestellt.

Das Mikrofon 1 ist mittig in der Besäumschere zwischen den beiden oberen Besäummessern 3a und 3b unterhalb der Passlinie des Stahlbands positioniert, um die von beiden Seiten ankommenden Geräusche gleich gut aufnehmen zu können. Eine außermittige Positionierung des Mikrofons 1 ist prinzipiell auch möglich, insofern der Abstand des Mikrofons zu den Besäummessern 3a bis 3d jeweils mindestens 50 mm und höchstens 1500 mm beträgt. Vorliegend betrug der Abstand zwischen dem Mikrofon und den Rundmessern 3a, 3b jeweils 700 mm und zu den Rundmessern 3c und 3d jeweils 720 mm.

Als Mikrofon 1 wurde ein vorpolarisiertes Elektretmikrofon mit integriertem Verstärker vom Modell 130D20 der Firma PCB Piezotronics verwendet, welches auch unter der Bezeichnung "ICP Electret Array Microphone" bekannt ist. Es handelt sich dabei um ein dynamisches Free-Field Mikrofon mit einem dynamischen Bereich von weniger als 122 dB. Das Mikrofon weist im Frequenzband von 100 bis 4.000 Hz eine Abweichung von +/- 1 dB und im Bereich von 20 bis 15.000 Hz eine Abweichung von -2 bis +5 dB auf. Bei einer Betriebsspannung von 18 bis 30 V bei 2 bis 20 mA liefert das Mikrofon eine Ausgangsspannung von 5 bis 12 V. Das Mikrofon liefert aufgrund seiner Ausgangsspannungsdifferenz von 7 V bauartbedingt einen Aussteuerbereich von +/- 3 V oder +/- 5 V. Die üblichen Ausgangsspannungswerte liegen typischerweise im Millivoltbereich und betragen zwischen 45 - 450 mV. Aufgrund der Versorgung nach IEPE-Standard kann die Anschlussleitungslänge bis zu einige Meter betragen.

Wie Fig. 2 zeigt, werden die vom Mikrofon 1 aufgenommenen Geräusche als elektrische Signale in ein Signalanschlussgehäuse 5 geleitet, worin sie zunächst in eine Signalaufbereitungseinheit 6 geleitet werden. Das Signalanschlussgehäuse 5 umfasst eine Signalaufbereitungseinheit 6 und eine Datenerfassungseinheit 7. In den durchgeführten Betriebsversuchen wurde die Signalaufbereitungseinheit 6 mit einer Betriebsspannung von 24 V betrieben, und als Signalaufbereitungseinheit 6 wurde der "ICP Signal Conditioner 682A02" der Firma "PCB Piezotronics" verwendet. In der Signalaufbereitungseinheit 6 wurden die Wechselsignale des Mikrofons zunächst über einen Hochpass 8 ausgekoppelt. Im Verstärker 9 wurden die Signale anschließend um den Faktor 1, 10 oder 100 verstärkt. Der Verstärkungsfaktor wurde abhängig vom Umgebungsschall gewählt. Zur Bestimmung des Verstärkungsfaktors wurde zunächst zu Beginn des Messaufbaus eine störungsfreie Referenzmessung zur Bestimmung des Umgebungsschalls durchgeführt. Auf Basis der Referenzmessung wurde zunächst der Faktor 1 gewählt. Das Grundsignal liegt hierbei in Höhe der Nulllinie, und der Umgebungsschall beträgt höchstens ein Drittel des gesamten Messbereichs. Der Messbereich ist typischerweise auf einen Spannungsbereich von +/- 10 V begrenzt. Vorteilhafterweise kann der Messbereich innerhalb dieses Spannungsbereichs von typischerweise +/- 10 V in Abhängigkeit des Verstärkungsfaktors variiert werden. Treten unterschiedliche betriebliche Gegebenheiten und damit unterschiedliche Umgebungsschallsituationen auf, so können diese durch Änderung des Verstärkungsfaktors berücksichtigt werden, um das Risiko für Fehlanzeigen zu minimieren. In der betrieblichen Erprobung an Stahlbandbesäumvorrichtungen haben sich Verstärkungsfaktoren von 1, 10 oder 100 als geeignet erwiesen zur Anwendung bei unter betrieblichen Einsatzbedingungen typischem Umgebungsschall. Die Auswahl des zu verwendenden Verstärkungsfaktors erfolgte unter Berücksichtigung des Kriteriums, dass die Signale durch den Verstärkungsfaktor nur insoweit verstärkt werden, als dass der Umgebungsschall maximal ein Drittel des Messbereichs belegt. Danach wurden die Signale durch einen Tiefpass 10, welcher eine Grenzfrequenz von 15 kHz aufwies, geleitet. Die Ausgangssignale der Signalaufbereitung betrugen danach höchstens +/- 6 V.

Im Weiteren wurde das Mikrofon von der Signalaufbereitungseinheit 6 mit Strom versorgt. Die Versorgung des Mikrofons mit Strom basierte dabei auf dem "Integrated Electronics Piezo-Electric" Standard. Dabei wurde das Mikrofon mit einer Konstantstromquelle versorgt. Durch den konstanten Strom stellte sich eine Arbeitspunktspannung ein, die über dem Mikrofon abfiel. Diese lag bei dem vorliegend verwendeten Mikrofon bei 5 bis 12 V. Aus der über dem Mikrofon abfallenden Spannung und der Versorgungsspannung von 18 V ergab sich eine Spannung von 6 bis 13 V an der Signalaufbereitungseinheit 6. Der Ruhespannung wurde nun das Spannungssignal des Mikrofons überlagert. Durch den in der Signalaufbereitungseinheit 6 befindlichen Hochpass 8 wurde die Gleichspannung unterdrückt. Die durch den Schalldruck erzeugten Wechselsignale überlagerten diese Ruhespannung.

Die Signale wurden anschließend in die Datenerfassungeinheit 7 geleitet. Im vorliegenden Beispiel wurde die Datenerfassungseinheit "NI USB-6210" verwendet. Die Datenerfassungseinheit 7 umfasst einen Analog-Digital-Umsetzer 11. Dieser wies 16 Analogeingänge mit jeweils 16 bit und einer Abtastrate von bis zu 250 kS/s auf. Der Analog-Digital-Umsetzer 11 der Datenerfassungseinheit 7 wies zudem vier Digitaleingänge, vier Digitalausgänge sowie zwei Zähler mit 16 bit Auflösung auf. Der Analogeingang des Analog-Digital-Umsetzers 11 wies einen maximalen Spannungsbereich bis +/- 10 V auf. Die Datenerfassungseinheit 7 umfasst zudem eine Datenübertragungseinheit 12, durch welche die Datenübertragung bevorzugt über USB als Datenstrom erfolgte, wie beispielsweise mittels des von der Firma National Instruments entwickelten sogenannten "Datastream".

In den vorliegenden Versuchen wurde eine Signaldichte von 125.000 Signalen pro Millimeter umlaufender Messerlänge.

Die in digitale Daten umgewandelten Signale wurden anschließend in die Datenverarbeitungseinheit 13 geleitet. Diese umfasste einen OPC-Server der Firma IBH, welcher eine Schnittstelle des Messsystems bildete. So wurde der OPC-Server eingesetzt, um Variablen wie beispielsweise Eingänge, Ausgänge oder Datenbausteine der speicherprogrammierbaren Steuerung (SPS) zu lesen und / oder zu schreiben. Die Bedienung erfolgte auf einer konventionellen Benutzeroberfläche. Mittels der IP-Adresse sowie der Rack- und Steckplatznummer wurde auf den Hauptprozessor des OPC-Servers zugegriffen. Auf die genutzten Variablen wurde dabei symbolisch Zugriff genommen, sodass Namen für Variablen vergeben wurden, welche dann im OPC-Server zu Verfügung standen. Die Datenverarbeitungseinheit 13 umfasste außerdem eine Software zur Datenverarbeitung. In den vorliegenden Versuchen wurde die Software DASYLab13 der Firma Measurement Computing Corporation verwendet.
In den vorliegenden Versuchen wurden für die weitere Verarbeitung der digitalisierten Signaldaten bekannte mathematische Filter und weitere Filtermethoden verwendet wie beispielsweise rekursive Filter, insbesondere vom Typ Butterworth und Fast-Fourier-Transformationen. So wurden die Signale mittels eines rekursiven Filters vom Typ Butterworth auf den Frequenzbereich zwischen der 300. bis zur 400. Oberwelle gefiltert. Die Signaldichte betrug 125.000 Signale pro Millimeter Messerumfang, welcher mit der umlaufenden Messerlänge übereinstimmt. Mittels einer Fast-Fourier-Transformation wurden die Signale über 10 Signallängen zu je einer Sekunde aufgeteilt, sodass die Amplitudengänge der Signale erhalten blieben.

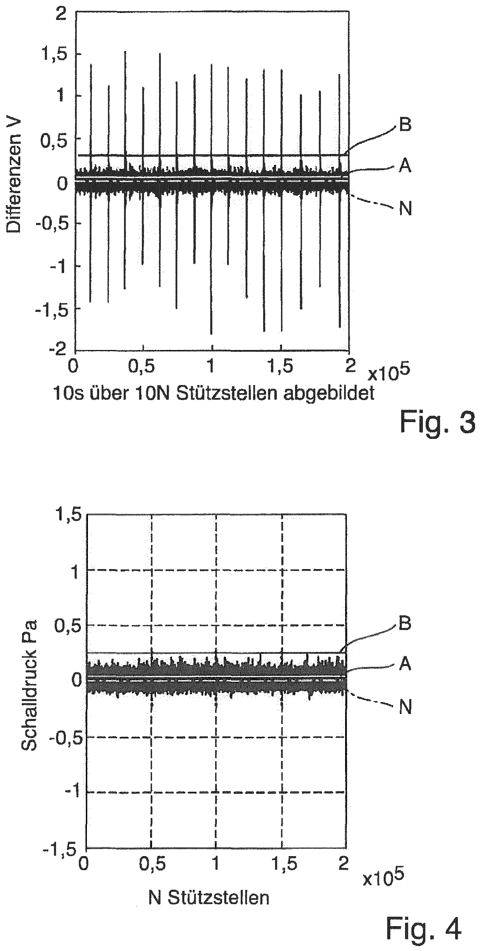

Fig. 3 zeigt eine exemplarische Darstellung der digitalisierten Daten nach erfolgter Filterung. Die Schalldrücke sind als Amplitudensignale in Form von Spannungsdifferenzen in Volt in Abhängigkeit von der Zeit dargestellt. Es sind die Daten von 22 Messerumläufen aufgetragen. In Fig. 3 wurde die Abhängigkeit der Signalleistung in Volt von der Anlagengeschwindigkeit berücksichtigt. Die Leistung der Oberwellen wurde oberhalb eines auf 0,2 V festgelegten Normalleistungsniveaus festgelegt, wobei das Normalleistungsniveau experimentell ermittelt wurde. Die horizontale Linie A in Fig. 3, welche kurz oberhalb der Nulllinie N verläuft, stellt den Gleichrichtmittelwert UGL dar. Der Gleichrichtmittelwert ist von Messerumlauf zu Messerumlauf numerisch nur geringfügig verändert, sodass diese Veränderung in Fig. 3 nicht erkennbar ist. Der Schwellwert wurde als der 10-fache Wert des Gleichrichtmittelwerts des letzten artefaktfreien Messerumlaufs berechnet und ist in Fig. 3 als weitere horizontale Linie B oberhalb der Linie des Gleichrichtmittelwerts abgebildet. Der letzte artefaktfreie Messerumlauf der Messreihe ist in Fig. 3 nicht dargestellt. Aus Fig. 3 ist zu erkennen, dass für 22 Signale der Schalldruck jeweils über dem Schwellwert liegt. Es handelt sich demnach um Artefakte. Der Abstandsberechnung wurden die für einen Messerumlauf benötigte Zeitspanne t1, welche aus dem Messerdurchmesser von 0,3 m und der Messerumlaufgeschwindigkeit v = 2 m/s zu t1=(0,3 m*π)/(2 m/s) berechnet wurde, und die Abtastfrequenz fs, welche 32768 Signale/s betrug, zugrunde gelegt. Die Prozessdaten wie beispielsweise die Messerumlaufgeschwindigkeit wurden der Datenverarbeitungseinheit 13 von einem Prozessrechner 14 zugeführt.

Die Artefakte wiesen einen Abstand von jeweils 0,02 Sekunden zueinander auf. Von der Datenauswerteeinheit 13 wurde eine Defektanzeige ausgelöst. Die Defektanzeige erfolgte über eine Defektanzeigeeinheit 15, bei welcher es sich um einen an die Datenauswerteeinheit 13 angeschlossenen Computermonitor handelte, auf welchem ein blinkendes Warnsymbol angezeigt wurde.

Fig. 4 zeigt ein weiteres Ausführungsbeispiel eines Messdatenschriebs eines Rundmessers, wobei die Daten wie oben beschrieben bearbeitet wurden. Es wurde ein Stahlband der Güte HC340LA mit einer Dicke von 1,01 mm auf eine Breite von 1376 mm besäumt. Die Bandgeschwindigkeit in der Besäumschere belief sich auf 110 m/min. Der Schneidspalt der Besäummesser betrug 0,20 mm und die Eintauchtiefe der Messer in das Stahlband betrug 0,20 mm. Alle Signale verlaufen unterhalb des Schwellwerts, welcher durch die Linie B gekennzeichnet wird. Das Rundmesser weist keine Artefakte und keine Messerausbrüche auf.

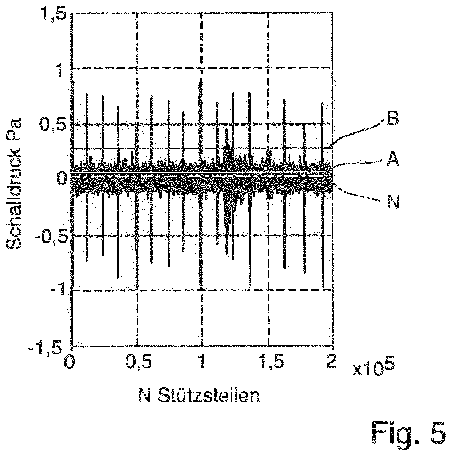

Fig. 5 zeigt ein weiteres Ausführungsbeispiel eines Messdatenschriebs eines Rundmessers, wobei die Daten wie oben beschrieben bearbeitet wurden. Es wurde ein Stahlband der Güte HC600 mit einer Dicke von 1,16 mm auf eine Breite von 1352 mm besäumt. Die Bandgeschwindigkeit in der Besäumschere belief sich auf 130 m/min. Der Schneidspalt der Besäummesser betrug 0,22 mm und die Eintauchtiefe der Messer in das Stahlband betrug 0,20 mm. Der Abstandsberechnung wurden die für einen Messerumlauf benötigte Zeitspanne t1, welche aus dem Messerdurchmesser von 0,3 m und der Messerumlaufgeschwindigkeit v = 2,17 m/s berechnet wurde, zugrunde gelegt. Damit umfasst ein Messerumlauf insgesamt 13.566 Signale. In Fig. 5 sind in mehr als drei aufeinanderfolgenden Messerumläufen Artefakte zu erkennen, die jeweils einen Abstand von einem Messerumlauf zueinander aufweisen. In diesem Fall lag ein Messerausbruch vor.

### BEZUGSZEICHEN

- 1: Mikrofon
- 2: Metallflachprodukt
- 3a, 3b, 3c, 3d: umlaufende Messer
- 4a, 4b, 4c, 4d: Messerhalterungen
- 5: Signalanschlussgehäuse
- 6: Signalaufbereitungseinheit
- 7: Datenerfassungseinheit
- 8: Hochpass
- 9: Verstärker
- 10: Tiefpass
- 11: Signalumsetzer
- 12: Datenübertragungseinheit
- 13: Datenverarbeitungseinheit
- 14: Prozessrechner
- 15: Defektanzeigeeinheit
- A: Linie für Gleichrichtmittelwert
- B: Linie für Schwellwert
- N: Nulllinie

## Patentansprüche

1. Verfahren zur Detektion von Fehlern an rotierenden Messern umfassend folgende Schritte:
a) Aufnehmen des von einem rotierenden Messer (3a, 3b, 3c, 3d) erzeugten Raumschalls mittels eines Mikrofons (1), welches einen räumlichen Abstand zu dem rotierenden Messer aufweist,
b) Weiterleiten und Verarbeiten der Raumschallsignale durch eine Signalaufbereitungseinheit (6),
c) Weiterleiten und Verarbeiten der von der Signalaufbereitungseinheit (6) ausgegebenen analogen Signale durch eine Datenerfassungseinheit (7),
d) Umwandeln der analogen Signale in digitale Signale in der Datenerfassungseinheit (7),
e) Weiterleiten der digitalen Signaldaten zu einer Datenverarbeitungseinheit (13),
f) Verarbeiten der digitalen Signaldaten mittels einer Datenverarbeitungseinheit (13), umfassend
f1) Ermittlung jeweils eines Schwellwerts (SW_i) für den Schalldruck jeweils eines vollständigen Messerumlaufs (M_i),
f2) Vergleich jedes einzelnen Amplitudensignals eines auf einen Messerumlauf (M_i) nachfolgenden Messerumlaufs (M_i+1) mit dem Schwellwert (SW_i) des letzten artefaktfreien Messerumlaufs (M_i),
f3) optionales Visualisieren der verarbeiteten Daten,
f4) Auslösen einer Defektanzeige, wenn in mindestens drei aufeinanderfolgenden Messerumläufen (M_i+1 bis M_i+3) periodisch an der gleichen Position im Messerumlauf wiederkehrende Amplitudensignale, welche jeweils über dem Schwellwert des letzten artefaktfreien Messerumlaufs liegen, auftreten,
g) Anzeigen eines Defekts mittels einer Defektanzeigeeinheit (15).

2. Verfahren nach Anspruch 1, wobei durch die Datenverarbeitungseinheit Signale mit einer Frequenz oberhalb der 500. Oberwelle eliminiert werden.

3. Verfahren nach Anspruch 1 oder 2, wobei durch die Datenverarbeitungseinheit Signale mit einer Frequenz unterhalb von 300 Hz und oberhalb von 400 Hz ausgeblendet werden.

4. Verfahren nach einem der vorangehenden Ansprüche, wobei je Millimeter Umlauflänge des umlaufenden Messers mindestens zwei Signale aufgezeichnet werden.

5. Verfahren nach Anspruch 4, wobei je Millimeter Umlauflänge des umlaufenden Messers mindestens zehn Signale aufgezeichnet werden.

6. Verfahren nach Anspruch 5, wobei je Millimeter Umlauflänge des umlaufenden Messers mindestens 100 Signale aufgezeichnet werden.

7. Verfahren nach einem der vorangehenden Ansprüche, wobei der Schwellwert mindestens das 4-fache und höchstens das 12-fache des Gleichrichtmittelwerts beträgt.

8. Verfahren nach Anspruch 7, wobei der Schwellwert mindestens das 6-fache des Gleichrichtmittelwerts beträgt.

9. Verfahren nach einem der vorangehenden Ansprüche, wobei das Auslösen einer Defektanzeige erfolgt, wenn in mindestens vier aufeinanderfolgenden Messerumläufen (M_i+1 bis M_i+4) periodisch an der gleichen Position im Messerumlauf wiederkehrende Amplitudensignale, welche jeweils über dem Schwellwert des letzten artefaktfreien Messerumlaufs liegen, auftreten.

10. Verfahren nach einem der vorangehenden Ansprüche, wobei die Signalunschärfe eines Artefakts nicht mehr als +/- 7 % der in fortlaufenden Signalnummern bemessenen Länge des Messerumlaufs beträgt.

11. Vorrichtung zur Detektion von Fehlern an rotierenden Messern umfassend mindestens ein oder mehrere zu den Messern (3a, 3b, 3c, 3d) berührungslos positionierte Mikrofone (1), eine Signalaufbereitungseinheit (6), eine Datenerfassungseinheit (7), eine Datenverarbeitungseinheit (13) und eine Defektanzeigeeinheit (15), wobei die Datenverarbeitungseinheit (13) eine bei Vorliegen von in mindestens drei aufeinanderfolgenden Messerumläufen periodisch an der gleichen Position im Messerumlauf wiederkehrenden und jeweils über dem Schwellwert des letzten artefaktfreien Messerumlaufs liegenden Amplitudensignalen eine Meldung über einen Messerdefekt auslösende Einheit umfasst.

12. Vorrichtung nach Anspruch 11, wobei das Mikrofon (1) in einem Abstand von mindestens 50 mm und höchsten 1500 mm zum rotierenden Messer (3a, 3b, 3c, 3d) positioniert ist.

13. Vorrichtung nach Anspruch 11 oder 12, wobei das Mikrofon (1) als Elektretmikrofon ausgebildet ist.

14. Vorrichtung nach einem der Ansprüche 11 bis 13, wobei die Signalaufbereitungseinheit (6) einen Hochpass (8), einen Verstärker (9) und einen Tiefpass umfasst (10).
